## Europäisches Patentamt
## European Patent Office
## Office européen des brevets

(1) Publication number: **0 148 583**
**B1**

# EUROPEAN PATENT SPECIFICATION

(45) Date of publication of patent specification: **10.02.88**

(51) Int. Cl.⁴: **F 04 D 29/08, F 16 J 15/34**

(21) Application number: **84308213.2**

(22) Date of filing: **27.11.84**

(54) Fuel pumps.

(30) Priority: **22.12.83 GB 8334146**

(43) Date of publication of application:
**17.07.85 Bulletin 85/29**

(45) Publication of the grant of the patent:
**10.02.88 Bulletin 88/06**

(84) Designated Contracting States:
**DE FR GB IT**

(56) References cited:
**DE-A-1 528 800**
**FR-A-1 505 487**
**FR-A-2 226 875**
**FR-A-2 232 690**
**US-A-2 598 484**
**US-A-3 417 705**
**US-A-3 475 033**
**US-A-3 827 702**

(73) Proprietor: **LUCAS INDUSTRIES public limited company**
**Great King Street**
**Birmingham, B19 2XF West Midlands (GB)**

(72) Inventor: **Pritchard, John David**
**2 Throckmorton Road**
**Alcester B49 6QA (GB)**

(74) Representative: **Cuddon, George Desmond et al**
**MARKS & CLERK Alpha Tower Suffolk Street Queensway**
**Birmingham B1 1TT (GB)**

Courier Press, Leamington Spa, England.

## Description

This invention relates to centrifugal pumps as defined in the preamble of claim 1 and in particular to pumps for delivering fuel to the reheat system of a gas turbine engine.

Gas turbine engine reheat systems are operated only intermittently and are supplied with fuel from a centrifugal pump which is separate from that used for supplying fuel to the main burners of the engine. The reheat pump impeller is supported in a cantilever fashion in bearings and is typically constantly driven by turbine which is supplied with air from the engine compressor. The pump inlet may be shut off by way of a valve so that the pump is emptied when the reheat system is not in use. Such an arrangement is disclosed in GB—A—1423363. It is a disadvantage of such an arrangement that fuel seals in the pump can overheat when the pump is empty. It has been proposed to overcome this disadvantage by providing a separate coolant flow for the fuel seals. However, the space needed for such a coolant flow has the effect that the pump impeller overhangs its supporting bearings by an unacceptable amount.

US—A—3475033 shows a centrifugal pump according to the first part of claim 1 having a sealing arrangement which is inoperative when the pump is not in use and which becomes effective in response to a rise in pressure at the pump outlet. It is a disadvantage of this prior art pump that fuel will leak past the sealing arrangement until the pump outlet pressure rises to a sufficient level, and this leakage may itself delay the required pressure rise. Additionally operation of a gas turbine engine reheat system occurs only in response to a requirement for maximum engine power, and any delay in response of the engine to this requirement is highly undesirable. Any substantial leakage of fuel from the pump as a result of slowness of operation of the sealing arrangement will delay delivery of fuel to the reheat system.

Pumps for reheat systems are commonly supplied with fuel by a backing pump which may also supply fuel to a high pressure pump in the main fuel control of the engine. The present invention provides a centrifugal pump whose sealing arrangement can make use of the backing pump delivery pressure to effect substantially immediate sealing when the pump of the invention is brought into use. Such a sealing arrangement not only avoids leakage in the reheat pump but avoids a drop in fuel supply to the main fuel control system as a result of that leakage.

According to the invention the centrifugal pump for fuel has a valve device for shutting off the pump inlet and a sealing arrangement between the pump impeller and its housing, the sealing arrangement extending slidably and sealingly into an annular chamber in the housing. A pressure signal derived from a zone immediately downstream of the valve device is applied to the chamber to urge the sealing device into engagement with the impeller.

An embodiment of the invention will now be described by way of example only and with reference to the accompanying drawings in which:—

Figure 1 shows a reheat system for a gas turbine engine, incorporating a pump according to the invention,

Figure 2 shows to an enlarged scale, a sealing arrangement within the pump of Figure 1, and

Figures 3 and 4 show plan and side views of a spring washer forming part of the sealing arrangement of Figure 2.

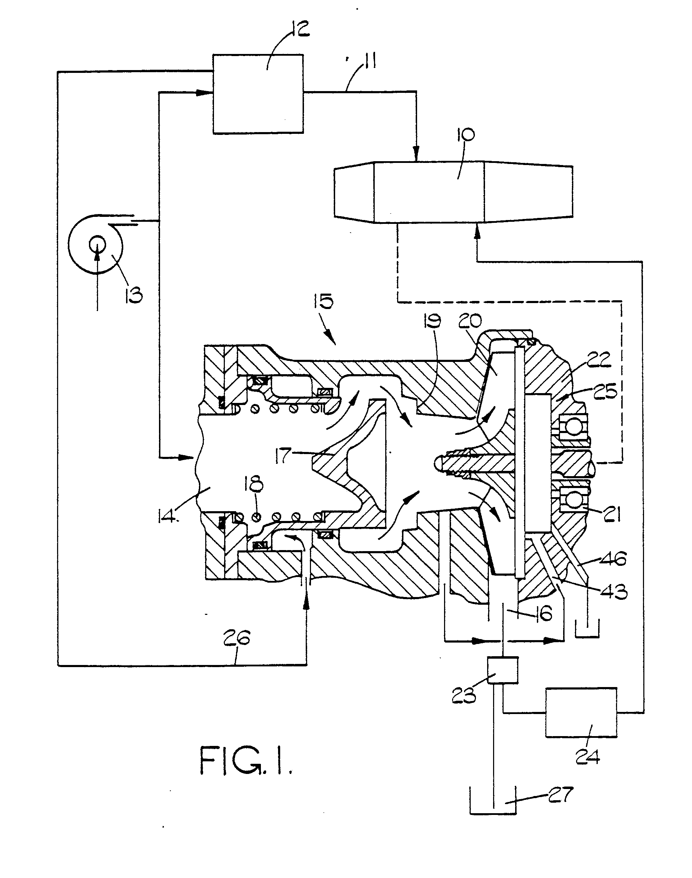

As shown in Figure 1 a gas turbine engine 10 may be supplied with fuel through a line 11 from a main burner control system 12 which includes a high pressure pump (not shown). The system 12 is supplied from a backing pump 13. The pump 13 supplies fuel at a pressure of 165 psi (1.14 × $10^6$ Pascals). The backing pump 13 also supplies fuel to the inlet 14 of a pump 15 from whose outlet 16 fuel can flow to reheat burners of the engine 10.

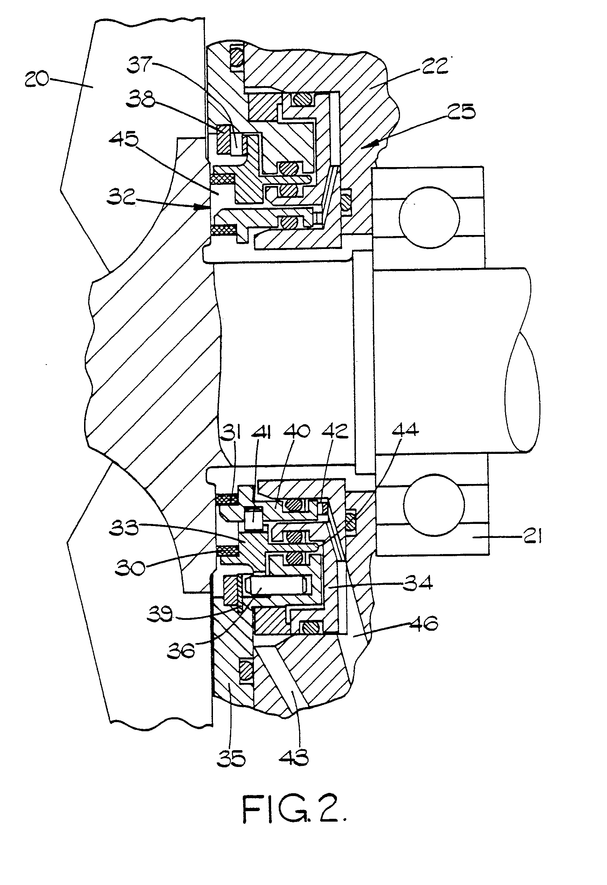

The pump 15 includes a valve closure element 17 which is biassed by a spring 18 towards sealing engagement with a seat 19 and is movable against the bias of spring 18 by a pressure signal in a line 26. It is arranged that the closure element 17 is operated only in the fully open position (shown) or in shutting engagement with the seat 19. A vane impeller 20 is journalled in a thrust bearing 21 in the pump housing 22 so as to extend in cantilever fashion from the bearing 21. The outlet 16 includes a divergent portion (not shown) by means of which velocity head in the outlet 16 may be converted to pressure head, and a combined shut-off and dump valve 23 which can be opened against a spring bias by the pressure head in the outlet 16, to pass fuel to the engine 10. In its shut conditions the valve 23 connects the pump outlet 16 to a drain 27. A fuel control arrangement 24 which may be of a type disclosed in U.K. Patent 1423363, regulates fuel flow to the reheat burners. Between the impeller 20 and the housing 22 is a sealing arrangement 25 which is shown in more detail in Figure 2.

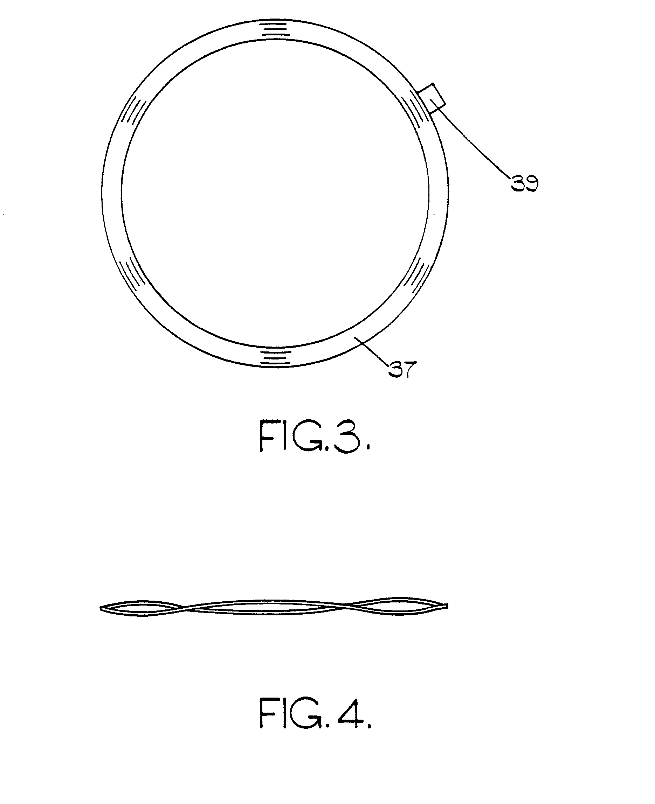

As shown in Figure 2 the sealing arrangement 25 comprises concentric rigid annular sealing elements 30, 31, which are engageable with a face 32 of the impeller 20. The radially outer sealing element 30 is mounted on a carrier 33 which is axially and sealingly slidable relative to a support plate 34 and a part 35 of the sealing arrangement 25. A pin 36 is mounted in the part 35 and passes with slight clearance through the carrier 33 to prevent relative rotation between the latter and the part 35. A spring washer 37 is engaged between the carrier 33 and a retaining ring 38 in the part 35. The washer 37 is shown in more detail in Figures 3 and 4 and has a wave-like shape. The washer 37 is oriented in the housing so as to lie clear of the pin 36 and is maintained in this orientation by a tab 39 which engages a recess (not shown) in the part 35.

The radially inner sealing element 31 is mounted on a carrier 40 which is axially slidable within the plate 34. A plurality of pins 41 is engaged between the carriers 33, 40 so that the carrier 40 is also restrained against rotation relative to the part 35. A spring washer 42 is engaged between the carrier 40 and plate 34, to urge the sealing element 31 against the face 32 of the impeller 20.

A passage 43 in the housing 22 communicates with a zone of the pump immediately downstream of the valve seat 19 (Figure 1) so that the delivery pressure from the backing pump 13 is applied to the passage 43 immediately the closure element 17 is moved to an open position. The pressure in the passage 43 is applied to an annular chamber 44 to urge the carrier 33 against the bias of the spring 37 and to bring the element 30 into sealing contact with the face 32 of the impeller 20. As indicated above this sealing contact is effected substantially immediately the element 17 is moved to an open position. With the element 17 in its shut position the pump 15 empties and the pressure in passage 43 falls to a value in which the sealing element 30 is lifted from the face 20 by the spring washer 37.

Lubricating oil applied to the bearing 21 is retained by the sealing element 31. Between the sealing elements 30, 31 is an annular zone 45 which communicates with a drain passage 46. Lubricant leaking past the sealing element 31 and fuel leaking past the sealing element 30 pass to the drain passage 46 by way of the zone 45. The pump 15 has a delivery pressure of approximately 1150 psi (7.93 × 10⁶ Pa), but the high duty sealing arrangement described above is effective to prevent significant leakage of the pumped fuel and at the same time to prevent undue heating and wear by lifting the element 30 when the pump is not in use.

The elements 30, 31 are of tungsten carbide and the surface 32 of the impeller is plasma spray coated with a wear resistance material such as tungsten.

## Claims

1. A centrifugal pump for fuel, including a housing (22) having an inlet (14) and an outlet (16), an impeller (20) for urging fuel from said inlet (14) to said outlet (16), and a sealing arrangement (25) between said impeller (20) and said housing (22), said sealing arrangement (25) comprising a first rigid annular sealing device (30, 33) movable towards and away from an axially directed face (32) of said impeller (20), a biassing device (37) urging said first sealing device (30, 33) away from said engagement, and means (43) for applying a pressure signal to effect said engagement, characterised in that said pump includes a valve (17) for shutting off said inlet (14), said first sealing device (30, 33) extends slidably and sealingly into an annular chamber (44) in a part (34) of said housing (22) and said pressure signal is derived from a zone immediately downstream of said valve (17) and is applied to said chamber (44).

2. A centrifugal pump according to claim 1 in which said sealing arrangement (25) includes a rigid annular sealing element (31) concentric with said first sealing device (30, 33).

3. A centrifugal pump according to claim 2 which includes a device (42) for biasing said second sealing element (31) into engagement with said impeller (20).

4. A centrifugal pump according to claim 3 in which said second sealing element (31) is located radially inwards of said first sealing device (30, 33).

5. A centrifugal pump according to any preceding claim which includes devices (36, 41) for restraining rotation of said first sealing device (30, 33) and said second sealing element (31) against rotation relative to said housing (22).

## Patentansprüche

1. Fliehkraftpumpe für Brennstoff, mit einem einen Einlaß (14) und einen Auslaß (16) aufweisenden Gehäuse (22), mit einem Schraubenrad (20), das Brennstoff aus dem Einlaß (14) zum Auslaß (16) fördert, und mit einer Dichtungsanordnung (25) zwischen dem Schraubenrad (20) und dem Gehäuse (22), wobei die Dichtungsanordnung (25) umfaßt: eine erste formsteife ringförmige Dichtungseinheit (30, 33), die in bezug auf eine axial gerichtete Fläche (32) des Schraubenrads (20) hin- und herbewegbar ist, ein die erste Dichtungseinheit (30, 33) aus dieser Verbindung weg beaufschlagendes Vorspannelement (37) und eine Leitung (43), die ein Drucksignal zur Herstellung dieser Verbindung anlegt, dadurch gekennzeichnet, daß die Pumpe ein Absperrorgan (17) zum Absperren des Einlasses (14) aufweist, daß sich die erste Dichtungseinheit (30, 33) verschiebbar und dichtend in einen Ringraum (44) in einem Teil (34) des Gehäuses (22) erstreckt, und daß das Drucksignal von einem unmittelbar abstrom vom Absperrorgan (17) befindlichen Bereich abgeleitet und dem Ringraum (44) zugeführt wird.

2. Fliehkraftpumpe nach Anspruch 1, wobei die Dichtungsanordnung (25) ein mit der ersten Dichtungseinheit (30, 33) konzentrisches formsteifes ringförmiges Dichtungselement (31) aufweist.

3. Fliehkraftpumpe nach Anspruch 2, umfassend ein Element (42), das das zweite Dichtungselement (31) in Kontakt mit dem Schraubenrad (20) beaufschlagt.

4. Fliehkraftpumpe nach Anspruch 3, wobei das zweite Dichtungselement (31) in bezug auf die erste Dichtungseinheit (30, 33) radial innen positioniert ist.

5. Fliehkraftpumpe nach einem der vorhergehenden Ansprüche, umfassend Elemente (36, 41), die die erste Dichtungseinheit (30, 33) und das zweite Dichtungselement (31) an einem Verdrehen relativ zum Gehäuse (22) hemmen.

## Revendications

1. Pompe centrifuge pour carburant, comportant un carter (22) qui présente une entrée (14) et une sortie (16), un rotor (20) pour refouler le carburant depuis ladite entrée (14) vers ladite sortie (16), ainsi qu'un dispositif d'étanchéité (25) entre ledit rotor (20) et ledit carter (22), ledit dispositif d'étanchéité (25) comprenant un premier ensemble d'étanchéité annulaire rigide (30, 33) qui peut se déplacer de façon à se rapprocher et à s'écarter d'une face (32) dudit rotor (20), un élément élastique (37) qui force ledit premier élément d'étanchéité (30, 33) à s'écarter de la position de contact d'étanchéité et un moyen (43) pour appliquer un signal, sous forme d'une pression, pour établir ledit contact d'étanchéité, caractérisée en ce que ladite pompe comporte une soupape (17) pour fermer ladite entrée (14); en ce que ledit premier ensemble d'étanchéité (30, 33) est monté de façon coulissante et étanche, dans une chambre annulaire (44) prévue dans une pièce (34) dudit carter (22) et en ce que ledit signal, sous forme d'une pression, est dérivé d'une zone située immédiatement en aval dudit robinet (17) et appliqué à ladite chambre (44).

2. Pompe centrifuge selon la revendication 1, caractérisée en ce que ledit dispositif d'étanchéité (25) comporte un élément d'étanchéité annulaire rigide (31) concentrique avec ledit premier ensemble d'étanchéité (30, 33).

3. Pompe centrifuge selon la revendication 2, caractérisée en ce qu'elle comporte un élément (42) sollicitant ledit second élément d'étanchéité (31) à venir en contact d'étanchéité avec ledit rotor (20).

4. Pompe centrifuge selon la revendication 2, caractérisée en ce que ledit second élément d'étanchéité (31) est placé radialement à l'intérieur dudit premier ensemble d'étanchéité (30, 33).

5. Pompe centrifuge selon l'une quelconque des revendications précédentes, caractérisée en ce qu'elle comporte des éléments (36, 41) pour empêcher la rotation dudit premier ensemble d'étanchéité (30, 33) et une rotation dudit second élément d'étanchéité (31) par rapport audit carter (22).

FIG.1.

0 148 583

FIG. 2.

2

FIG.3.

FIG.4.